# EUROPÄISCHE PATENTANMELDUNG

(11) **EP 1 247 607 A2**
(43) Veröffentlichungstag der Anmeldung: **09.10.2002**
(21) Anmeldenummer: 02405228.4
(22) Anmeldetag: 22.03.2002
(51) Int. Cl.: B23K 1/19

(54) **Verfahren zur Herstellung von Verbundaufbauten zwischen metallischen und nichtmetallischen Materialien**

(30) Priorität: 06.04.2001 DE 10117128
(71) Anmelder: ALSTOM (Switzerland) Ltd, 5401 Baden (CH)
(72) Erfinder: Fried, Reinhard, 5415 Nussbaumen (CH)

(57) **Zusammenfassung**

Die Erfindung betrifft ein Verfahren zur Herstellung von Verbundaufbauten (1) zwischen metallischen und nichtmetallischen Materialien, wobei auf einer Oberfläche (10) eines metallischen Grundkörpers (2) eine Haftschicht (3) aufgebracht wird, auf die anschliessend ein nichtmetallisches Material (5) aufgetragen wird, und wobei die Haftschicht (3) aus einzelnen, eine pilzähnliche Form mit Steg (8) und Kopf (9) aufweisenden, aufgeschweissten Rivets (4) hergestellt wird. Das Verfahren ist dadurch gekennzeichnet, dass in einem ersten Verfahrensschritt die pilzförmigen Rivets (4) vorgefertigt werden, in einem zweiten Verfahrensschritt diese Rivets (4) für eine maschinelle Weiterverarbeitung sortiert, ausgerichtet und derart in ein Schweissgerät (15) eingebracht werden, dass in einem dritten Verfahrensschritt die Rivets (4) nacheinander jeweils mit dem freien Ende ihres Steges (8) auf die Oberfläche (10) des Grundkörper (2) aufgeschweisst werden und somit die Ankerpunkte für das nichtmetallische Material (5) bilden. Die Erfindung betrifft auch die nach dem Verfahren hergestellten Verbundaufbauten (1).

## Beschreibung

### Technisches Gebiet

Die Erfindung betrifft ein Verfahren zur Herstellung von Verbundaufbauten zwischen metallischen und nichtmetallischen Materialien, insbesondere für den Gas- und Dampfturbinenbau sowie einen nach dem Verfahren hergestellten Verbundaufbau zwischen einem metallischen und einem nichtmetallischen Material.

### Stand der Technik

Der Aufbau von Verbundaufbauten aus metallischen und nichtmetallischen Materialien, wie beispielsweise das Beschichten von metallischen Bauteilen im Gas- und Dampfturbinenbau mit keramischen Wärmedämmschichten, ist allgemein bekannter Stand der Technik.

Dabei wird auf eine metallische Oberfläche eines Grundkörpers beispielsweise mittels Plasma- oder Flammspritzen eine Haftschicht mit möglichst rauher Oberfläche aufgespritzt. Die Rauhigkeit der Oberfläche dient dem formschlüssigen Verankern der ebenfalls auf diese Oberfläche plasma- oder flammgespritzten Wärmedämmschicht aus einem nichtmetallischen Material. Wegen der sehr unterschiedlichen Wärmeausdehnungskoeffizienten zwischen Metallen und nichtmetallischen Materialien, wie Keramiken, gelingen diese Verbindungen üblicherweise nur bis zu einer Schichtdicke von <500 µm.

Die plasma- oder flammgespritzten keramischen Wärmedämmschichten werden auch Thermal Barrier Coating (TBC) genannt. Mit derartigen Wärmedämmschichten versehene Bauteile werden beispielsweise in Brennkammern eingesetzt oder als Gasturbinenschaufeln verwendet.

Bekannte Verfahren zur Erzeugung von Haltestrukturen für keramische Wärmedämmschichten sind neben dem beschriebenen Plasma- oder Flammspritzen von Haftschichten beispielsweise auch das Senkerodieren, das Laser-Wasserstrahl-Elekronenstrahl Modeling, das Löten und Sintern von Partikeln (DE 195 45 025 A1) oder die Anfertigung einer mitgegossenen, im wesentlichen netzartigen Skelettstruktur auf der Oberfläche des Grundkörpers (EP 0 935 009 A1).

Wird der Verbundaufbau mit hochporöser Keramik gespritzt, so können Schichtdicken bis zu 1,5 mm erreicht werden. Diese Keramiken sind jedoch gegen Fremdkörpereinschlag ausserordentlich empfindlich, so dass nur eine sehr kurze Lebenszeit derartiger Verbundaufbauten gegeben ist und diese daher oft ausgetauscht bzw. repariert werden müssen.

Um beispielsweise den Kühlluftverbrauch in einer Gasturbine deutlich zu senken und somit den Wirkungsgrad zu heben, braucht man eine deutlich wirksamere Wärmedämmung, als dies aus dem Stand der Technik, wie beispielsweise aus dem Dokument DE 195 45 025 A1, bekannt ist.

Diese wirksamere Wärmedämmung lässt sich durch die Applikation dickerer TBC-Schichten erreichen. Um eine ausreichende Haftung dieser dicken Schichten auf einem Grundkörper zu gewährleisten müssen aber sehr grobe Haltestrukturen auf der Oberfläche des Grundkörpers erzeugt werden.

Der Anmelderin ist ein Verfahren (DE 100 57 187.5) bekannt, bei dem kugel- oder pilzförmige grobe Haltestrukuren (Ankerpunkte, auch Rivets genannt) auf eine Oberfläche durch einen Schweissprozess, insbesondere Lichtbogen-Schweissprozess hergestellt werden. Dabei wird zur Erzeugung dieser Haltestrukturen ein bevorzugt endloser Schweissdraht abgeschmolzen, wobei der abgeschmolzene Schweissdraht selbst die speziell geformten Ankerpunkte bildet. Derartige aufgeschweisste grobe Ankerpunkte unterscheiden sich deutlich von angegossenen Skelettstrukturen, wie sie aus EP 0 935 009 A1 bekannt sind.

Die Zusammensetzung des aufgeschweissten Materials ist vorteilhafterweise grundsätzlich frei wählbar. Damit kann weitgehend auf die örtliche Situation, z. B. bezüglich Oxidation und Korrosion eingegangen werden. Die aus der Druckschrift EP 0 935 009 A1 bekannte angegossenen Struktur besteht dagegen aus dem gleichen Material wie das Substrat. Ein weiterer grundsätzlicher Unterschied besteht darin, dass die angegossene Struktur ein durchgängiges Netz darstellt, innerhalb dem sich dann nach dem Beschichten einzelne Keramikinseln befinden. Die geschweissten Strukturen weisen dagegen ein durchgehendes Keramiknetz auf mit einzelnen Metallinseln, was sich positiv auf die Eigenschaften der Schicht auswirkt. So sind insbesondere die niedrigere Wärmeleitung, die geringere der Oxidation ausgesetzte Metalloberfläche und die bessere Verankerung der Keramikschicht bei den geschweissten Strukturen im Vergleich zu den gegossenen netzartigen Strukturen zu nennen.

Nachteilig an diesem bekannten Verfahren zur Herstellung der geschweissten Haltestrukturen, bei dem kugel- oder pilzähnliche Ankerpunkte mittels Lichtbogen-Schweissens durch Abschmelzen des Schweissdrahtes gebildet und auf den Grundkörper aufgeschweisst werden, ist, dass die Bildung der Ankerpunkte in mehrere Schweissphasen unterteilt werden muss, welche eine komplizierte Steuerung des Schweissvorganges erfordern.

### Darstellung der Erfindung

Die Erfindung versucht, diesen Nachteil zu vermeiden. Ihr liegt die Aufgabe zugrunde, ein Verfahren für die Herstellung von geschweissten Verbundaufbauten zwischen metallischen und nichtmetallischen Materialien, insbesondere für den Gas- und Dampfturbinenbau sowie einen Verbundaufbau zwischen metallischen und nichtmetallischen Materialien zu schaffen, bei dem einerseits eine grosse Schichtdicke eines nichtmetallischen Materials stabil haftend und unempfindlich gegen Schlageinwirkung auf ein metallisches Material aufgebracht wird und andererseits das Verfahren gleichzeitig einfach zu realisieren ist.

Erfindungsgemäss wird dies bei einem Verfahren gemäss dem Oberbegriff des Patentanspruches 1 dadurch gelöst, dass in einem ersten Verfahrensschritt pilzförmige, aus Steg und Kopf bestehende Rivets vorgefertigt werden, dass in einem zweiten Verfahrensschritt diese Rivets für eine maschinelle Weiterverarbeitung sortiert, ausgerichtet und derart in ein Schweissgerät eingebracht werden, dass in einem dritten Verfahrensschritt die Rivets jeweils mit dem freien Ende des Steges auf die Oberfläche des Grundkörpers aufgeschweisst werden und somit die Ankerpunkte für das nichtmetallische Material bilden.

Vorteilhaft ist hierbei, dass der Schweissprozess sehr einfach und schnell zu realisieren ist und durch die Verwendung von unterschiedlich geformten Rivets eine Anpassung der Ankerpunkte in ihrer Form und Größe an die unterschiedlichen Schichtdicken für den Verbundaufbau vorgenommen werden kann. Ein weiterer Vorteil liegt bei diesen Verfahren vor allem darin, dass bei beschädigten Verbundaufbauten eine einfache Reparatur durchgeführt werden kann, da der Verbundaufbau, insbesondere die Gas- oder Dampfturbine, nicht mehr abgebaut und zur Reparatur versendet werden muss, sondern eine direkte Reparatur vor Ort vorgenommen werden kann. Für eine derartige Reparatur ist es lediglich notwendig, dass die vorgefertigten Rivets vorrätig sein müssen und ein entsprechendes Schweissgerät vorhanden ist.

Weiterhin wird die Aufgabe der Erfindung dadurch gelöst, dass die Haftschicht aus einzelnen vorgefertigten, einen Steg und einem Kopf aufweisenden Rivets (Ankerpunkten) besteht, welche mit dem Steg auf die Oberfläche des Grundkörpers aufgeschweisst sind.

Vorteilhaft ist hierbei, dass eine gezielte Positionierung der Ankerpunkte durchgeführt werden kann, wodurch eine erhebliche Steigerung der Festigkeit eines derartigen Verbundaufbaues erzielt werden kann. Da ausserdem das Material, die Höhe und der Durchmesser der Rivets in weiten Grenzen variierbar und kombinierbar sind (siehe Unteransprüche 3 bis 6), lassen sich die Eigenschaften der Haftschicht vorteilhaft genau an die jeweiligen Beanspruchungsbedingungen anpassen.

### Kurze Beschreibung der Zeichnung

In der Zeichnung ist ein Ausführungsbeispiel der Erfindung in den einzelnen Verfahrensschritten dargestellt.

Es zeigen:
- Fig. 1: eine Seitenansicht von vorfabrizierten Rivets mit unterschiedlicher Form;
- Fig. 2: eine schematische Darstellung der sortierten, ausgerichteten und aufgefädelten Rivets für die maschinelle Weiterverarbeitung;
- Fig. 3: eine schematische Darstellung des Aufschweissens der vorgefertigten Rivets auf die Oberfläche des Grundkörpers und
- Fig. 4: eine schematische Darstellung eines fertigen Verbundaufbaus zwischen einem metallischen und nichtmetallischen Material.

Es sind nur die für die Erfindung wesentlichen Merkmale dargestellt.

### Wege zur Ausführung der Erfindung

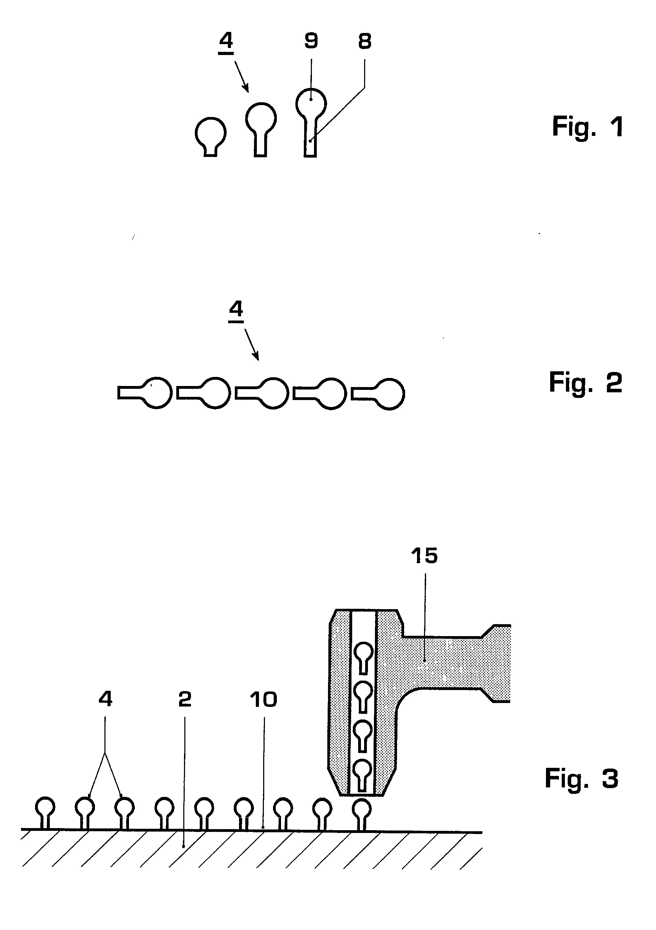

Nachfolgend wird die Erfindung anhand von Ausführungsbeispielen und der Fig. 1 bis 4 näher erläutert.

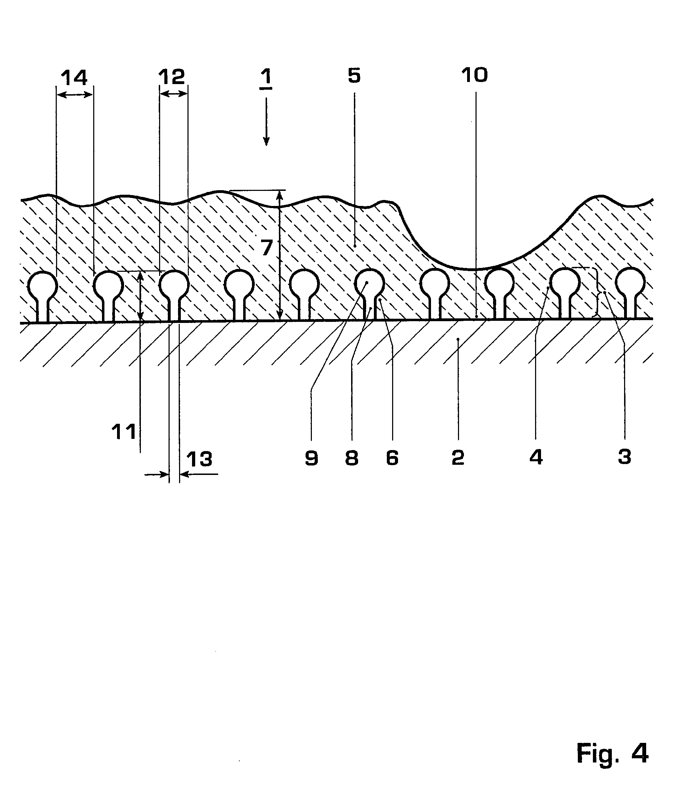

In den Fig. 1 bis 3 sind die einzelnen Schritte des erfindungsgemässen Verfahrens schematisch dargestellt, während in Fig. 4 der erfindungsgemässe Verbundaufbau beispielhaft abgebildet ist.

Bei derartigen Verbundaufbauten 1, wie speziell aus der Fig. 4 ersichtlich, wird auf die Oberfläche eines metallischen Grundkörpers 2 eine Haftschicht 3 aufgebracht, die aus einzelnen Ankerpunkten, hier Rivets 4 genannt, gebildet wird, auf die dann anschliessend ein nichtmetallisches Material 5 aufgetragen wird. Der Grundkörper 2 kann beispielsweise aus den Materialien IN 738, IN 939, MA 6000, PM 2000, CMSX-4, MARM 247 oder dgl. und die Rivets 4 aus den Materialien MCrAIY, SV 20, SV 34, Haynes 214, IN 625, 316 L oder dgl. bestehen. Es sind beliebige Materialkombinationen möglich.

Die Haftschicht 3 wird erfindungsgemäss durch einen Schweissprozess, und zwar einen Widerstandsschweissprozess hergestellt.

Der erste Schritt des erfindungsgemässen Verfahrens besteht darin, dass zunächst die Rivets 4 vorfabriziert werden. Dies kann z. B. durch Giessen oder Schmieden erfolgen.

Die vorgefertigten Rivets 4 haben eine pilzförmige Struktur und weisen einen Steg 8 und einen Kopf 9 auf. Wie aus Fig. 1 ersichtlich ist, kann die Form der Rivets 4 variieren, d. h. sie können unterschiedliche Steghöhen und unterschiedliche Stegbzw. Kopfdurchmesser haben. Von Vorteil ist, wenn die Rivets 4 einen Kopfdurchmesser 12 von ca. 0,8 mm bis 3 mm und einen Stegdurchmesser 13 von ca. 0,5 mm bis 2 mm, sowie eine Höhe 11 von ca. 1 mm bis 10 mm aufweisen. Dann sind sehr gute Verankerungsmöglichkeiten für die später aufzubringende nichtmetallische Schicht gegeben.

In einem zweiten Verfahrensschritt (Fig. 2) werden die Rivets 4 für die maschinelle Weiterverarbeitung sortiert, ausgerichtet und aufgefädelt. Je nach dem vorgesehenen Einsatzfall lassen sich Rivets 4 aus unterschiedlichen Materialien sowie mit unterschiedlicher Form miteinander kombinieren. Die aufgefädelten Rivets 4 werden anschliessend in ein Bolzenschweissgerät 15 eingebracht und dann wird Rivet 4 für Rivet 4 jeweils mit dem freien Ende des Steges 8 auf die Oberfläche 10 des metallischen Grundkörpers 2 widerstandsgeschweisst (Fig. 3).

Durch die spezielle Form der Rivets 4 wird erreicht, dass eine entsprechende Oberflächenrauhigkeit geschaffen wird, wodurch das im flüssigem Zustand aufzutragende nichtmetallische Material 5 eine formschlüssige Verbindung mit dem metallischen Grundkörper 2 herstellt, d.h., dass von den Rivets 4 entsprechende Hintergreifungen 6 in Form von Freiräumen zwischen den Rivets 4 und den Grundkörper 2 gebildet werden, in die das nichtmetallische Material 5 einfliesst bzw. sich verkrallt und somit eine feste Verbindung des nichtmetallischen Materials 5 mit dem metallischen Material, insbesondere dem Grundkörper 2, hergestellt wird. Das Auftragen des nichtmetallischen Materials 5, z. B. Keramik, kann über bekannte Vorgänge, wie das Plasma- oder Flammspritzen, erfolgen.

Wesentlich für die Herstellung eines derartigen Verbundaufbaus 1 ist, dass eine definierte Oberflächenrauhigkeit mit ausreichenden Hintergreifungen 6 hergestellt wird, damit eine hohe Festigkeit und eine ausreichende Schichtdicke 7 für das nichtmetallische Material 5 erzielt werden kann. Eine grosse Schichtdicke 7 bewirkt beispielsweise, dass bei einer Gasturbine eine deutliche Reduzierung des Kühlluftverbrauches erzielt wird, wodurch der Wirkungsgrad der Gasturbine wesentlich erhöht wird. Damit jedoch eine grosse Schichtdicke 7 geschaffen werden kann, muss eine wesentlich grössere Haltestruktur bzw. gröbere Haftschicht 3 gebildet werden, als dies aus dem Stand der Technik durch Auftragen von Lötpasten mit Zusatzelementen oder dgl. bekannt ist. Es kann also gesagt werden, dass in Abhängigkeit von der Form und der Größe der Rivets 4 eine entsprechend Schichtdicke 7 für das nichtmetallische Material 5 auf den Grundkörper 2 aufgetragen werden kann.

Bei derartigen Verbundaufbauten 1, wie sie beispielsweise bei Gas- oder Dampfturbinen eingesetzt werden, sollte das aufgetragenen, nichtmetallische Material 5 einen ausreichenden Fremdkörpereinschlag widerstehen können, ohne dabei das nichtmetallische Material 5 vom metallischen Material, also vom Grundkörper 2, zu trennen bzw. von diesem abzuspringen. Sollte jedoch aufgrund einer zu grossen Krafteinwirkung das nichtmetallische Material 5 durch einen Fremdkörpereinschlag dennoch abgesprengt werden, so ist zu gewährleisten, dass nur eine geringe Zerstörung der Oberfläche des Verbundaufbaues 1 stattfindet. Aufgrund der speziellen Herstellung der Haftschicht 3, insbesondere der speziellen Ausbildung der pilzförmigen Rivets 4, wird erreicht, dass bei einem Fremdkörpereinschlag nur jenes Material abgesprengt wird, welches über die Rivets 4 hinausragt, wobei jedoch das nichtmetallische Material 5 zwischen den Rivets 4 nicht vom Verbundaufbau 1 abgetrennt wird. Dadurch werden nur geringe Angriffspunkte über die Rivets 4 auf den Grundkörper 2 gebildet.

Dies wird insofern erreicht, als dass durch die speziell definierte Ausbildung der Rivets 4 mit Steg 8 und Kopf 9 grossflächige Hintergreifungen 6 und eine definierte Anzahl von Rivets 4 auf einer vorgegebenen Fläche gebildet werden können, so dass das nichtmetallische Material 5, welches die Rivets 4 einbettet, mit diesen eine sehr feste Verbindung herstellt und dieses somit nicht mehr zwischen den einzelnen Rivets 4 vom Grundkörper 2 getrennt werden kann. Eine derartige Darstellung mit einem Fremdkörpereinschlag, bei dem ein Teil des nichtmetallischen Materials 5 abgesprengt ist, ist schematisch im rechten Teil von Fig. 4 dargestellt. Daraus ist ersichtlich, dass das nichtmetallische Material 5 bei einem Fremdkörpereinschlag zwar oberhalb der Rivets 4 abgesprengt ist, jedoch zwischen den Rivets 4 haften bleibt und somit nur ein geringer Wärmeübergang auf den Grundkörper 2 über die Rivets 4 entstehen kann, wodurch eine unerwünschte Zerstörung des Verbundaufbaus 1 im Bereich des Fremdkörpereinschlages verhindert werden kann.

Es ist vorteilhaft, wenn die Schichtdicke 7 für das nichtmetallische Material 5 zwischen 1 mm und 20 mm beträgt, weil dadurch das Bauteil auch sehr hohen Temperaturunterschieden problemlos widersteht.

Selbstverständlich ist es möglich, dass die Erzeugung grossflächiger Haftschichten 3 aus lauter einzelnen Rivets 4 mit einem Schweissroboter durchgeführt werden kann, wodurch eine schnelle und gezielte Positionierung der einzelnen Rivets 4 ermöglicht wird.

Ein wesentlicher Vorteil liegt bei diesen Verfahren vor allem darin, dass bei beschädigten Verbundaufbauten 1 eine einfache Reparatur durchgeführt werden kann, da der Verbundaufbau 1, insbesondere die Gas- oder Dampfturbine, nicht mehr abgebaut und zur Reparatur versendet werden muss, sondern eine direkte Reparatur vor Ort vorgenommen werden kann. Für eine derartige Reparatur ist es lediglich notwendig, dass vorgefertigte Rivets 4 und ein entsprechendes Schweissgerät vorhanden sind. Somit können erhebliche Kosten, wie z. B. Transport- und Stillstandskosten, eingespart werden.

Weiterhin ist es möglich, dass mit einer entsprechenden Vorrichtung gleichzeitig mehrere Rivets 4 auf der Oberfläche 10 des Grundkörpers 2 aufgeschweisst werden, so dass eine erhebliche Zeiteinsparung bei grossflächigen Anordnungen der Rivets 4 erzielt werden kann.

Als konkretes Ausführungsbeispiel wird eine Wärmedämmplatte für eine Gasturbine beschrieben. Die metallische Platte besteht aus dem Material IN 939 mit folgender chemischen Zusammensetzung: 22.5 % Cr, 19 % Co, 2 % W, 1 % Nb, 1.4 % Ta, 3.7 % Ti, 1.9 % A1, 0.1 % Zr, 0.01 % B, 0.15 % C, Rest Ni. Sie bildet den mit einer keramischen Schicht 5 zu beschichtenden metallischen Grundkörper 2. Auf die Oberfläche 10 des metallischen Grundkörpers 2 wird eine Haftschicht 3 aufgebracht. Diese Haftschicht 3 wird gebildet aus Rivets 4, welche aus dem hochoxidationsfesten Material Haynes 214 (Zusammensetzung: 16 % Cr, 2.5 % Fe, 4.5 % A1, Y, Rest Ni) bestehen und in einer speziellen pilzförmigen Form mit Steg 8 und Kopf 9 vorgefertigt werden. Die Rivets 4 können mit bekannten Verfahren der Nagel-Nietherstellung, meist durch Schmieden, Drehen, Zerspanen wie Schraubentaumelformen hergestellt werden.

Die vorgefertigten Rivets 4 weisen im vorliegenden Ausführungsbeispiel einen Durchmesser 12 des Kopfes 9 von 1 mm, einen Durchmesser 13 des Steges 8 von 0,6 mm und eine Steghöhe von 1,2 mm auf, was einer gesamten Höhe 11 der Rivets 4 von 2,2 mm entspricht.

Diese vorgefertigten Rivets 4 werden dann zwecks maschineller Weiterverarbeitung ausgerichtet, aufgefädelt und in ein Bolzenschweissgerät 15 eingebracht. Die Rivets 4 werden nacheinander jeweils mit dem freien Ende des Steges 8 auf die Oberfläche des metallischen Grundkörpers 2, also der Wärmedämmplatte, aufgeschweisst, wobei der Abstand 14 zweier benachbarter Köpfe 9 der Rivets 4 etwa 1,5 mm beträgt.

Allgemein gilt, dass der Abstand 14 zweier benachbarter Köpfe 9 der Rivets 4 vorteilhafterweise im Bereich zwischen dem 1- bis 5-fachen des Durchmessers 12 der Rivets 4 liegen sollte. Grössere Abstände 14 sind ebenfalls möglich.

Nachdem die Rivets 4 aufgeschweisst worden sind und somit die Haftschicht 3 aufgebracht worden ist, wird anschliessend die Platte mit TBC mittels Air Plasma Spraying beschichtet. Die TBC-Schicht besteht aus Yttrium-stabilisiertem Zirkonoxid mit folgender chemischen Zusammensetzung: 2.5 % HfO₂, 7-9 % Y₂O₃, < 3 % andere, Rest ZrO. Die Schichthöhe 6 beträgt ca. 4,5 bis 5 mm.

Eine derartig beschichtete Wärmedämmplatte wurde einem Thermoschocktest von 1200 °C auf Raumtemperatur unterzogen. Auf der TBC-Seite wurde mittels Flamme geheizt (1200 °C), auf der Grundkörperseite mittels Pressluft gekühlt (900 °C). Es wurden 850 Thermozyklen absolviert ohne dass es zu einem Abplatzen der TBC-Schicht kam. Dies zeigt die ausgezeichneten Verankerungsmöglichkeiten des keramischen Materials 5 in der aus den aufgeschweissten Rivets 4 bestehenden Haftschicht 3.

### Bezugszeichenliste

- 1: Verbundaufbau
- 2: Metallischer Grundkörper
- 3: Haftschicht
- 4: Rivet (Ankerpunkt)
- 5: Nichtmetallisches Material
- 6: Hinterschneidung
- 7: Schichtdicke von Pos. 5
- 8: Steg von Pos. 4
- 9: Kopf von Pos. 4
- 10: Oberfläche von Pos. 2
- 11: Höhe von Pos. 4
- 12: Durchmesser von Pos. 9
- 13: Durchmesser von Pos. 8
- 14: Abstand zwischen zwei benachbarten Köpfen von Pos. 4
- 15: Schweissgerät

## Patentansprüche

1. Verfahren zur Herstellung von Verbundaufbauten (1) zwischen metallischen und nichtmetallischen Materialien, wobei auf einer Oberfläche (10) eines metallischen Grundkörpers (2) eine Haftschicht (3) aufgebracht wird, auf die anschliessend ein nichtmetallische Material (5) aufgetragen wird, und wobei die Haftschicht (3) aus einzelnen, eine pilzähnliche Form mit Steg (8) und Kopf (9) aufweisenden, aufgeschweissten Rivets (4) hergestellt wird, **dadurch gekennzeichnet,**
- **dass** die Rivets (4) in einem ersten Verfahrensschritt vorgefertigt werden,
- **dass** in einem zweiten Verfahrensschritt diese Rivets (4) für eine maschinelle Weiterverarbeitung sortiert, ausgerichtet und derart in ein Schweissgerät (15) eingebracht werden, dass
- in einem dritten Verfahrensschritt die Rivets (4) nacheinander jeweils mit dem freien Ende des Steges (8) auf die Oberfläche (10) des metallischen Grundkörpers (2) aufgeschweisst werden und somit Ankerpunkte für das nichtmetallische Material (5) bilden.

2. Verbundaufbau (1) zwischen metallischen und nichtmetallischen Materialien, bei dem auf einer Oberfläche (10) des einen Grundkörper (2) bildenden metallischen Materials eine Haftschicht (3) angeordnet ist, auf welche das nichtmetallische Material (5) aufgebracht ist, **dadurch gekennzeichnet, dass** die Haftschicht (3) aus einzelnen vorgefertigten pilzförmigen, einen Steg (8) und einen Kopf (9) aufweisenden Rivets (4) besteht, welche mit dem Steg auf die Oberfläche (10) des Grundkörpers (2) aufgeschweisst sind.

3. Verbundaufbau (1) nach Anspruch 2, **dadurch gekennzeichnet, dass** die Rivets (4) einen Durchmesser (12) des Kopfes (9) von ca. 0,8 mm bis 3 mm und einen Durchmesser (13) des Steges (9) von ca. 0,5 mm bis 2 mm aufweisen.

4. Verbundaufbau (1) nach Anspruch 2, **dadurch gekennzeichnet, dass** die Rivets (4) eine Höhe (11) von ca. 1 mm bis 10 mm aufweisen.

5. Verbundaufbau (1) nach Anspruch 2, **dadurch gekennzeichnet, dass** der Abstand (14) zwischen zwei benachbarten Köpfen (9) der Rivets (4) ca. das 1- bis 5-fache des Durchmessers (12) des Kopfes (9) beträgt.

6. Verbundaufbau (1) nach den Ansprüchen 2 bis 5 **dadurch gekennzeichnet, dass** der metallische Grundkörper (2) vorzugsweise aus IN 738, IN 939, MA 6000, PM 2000, CMSX-4 und MARM 247, die Rivets (4) vorzugsweise aus MCrAIY, Haynes 214, IN 626, 316 L, SV 20 und SV 34 bestehen und das nichtmetallische Material (5) keramisches Material, vorzugsweise Yttriumstabilisiertes Zirkonoxid, ist.

7. Verbundaufbau (1) nach Anspruch 2, **dadurch gekennzeichnet, dass** die Schichtdicke (7) für das nichtmetallische Material (5) zwischen 1 mm und 20 mm beträgt.
